# EUROPEAN PATENT APPLICATION

(11) **EP 4 446 476 A1**
(43) Date of publication of application: **16.10.2024**
(21) Application number: 22887398.0
(22) Date of filing: 07.10.2022
(51) Int. Cl.: C25D 1/04, C25D 3/38

(54) **ELECTROLYTIC COPPER FOIL WITH HIGH STRENGTH AND HIGH ELONGATION CHARACTERISTIC**

(30) Priority: 29.10.2021 KR 20210147045
(71) Applicant: LOTTE ENERGY MATERIALS CORPORATION, Iksan-si, Jeollabuk-do 54586 (KR)
(72) Inventor: SONG, Kideok, Iksan-si Jeollabuk-do 54586 (KR); PARK, Seulki, Iksan-si Jeollabuk-do 54586 (KR); LEE, Sun Hyoung, Iksan-si Jeollabuk-do 54586 (KR); LEE, Soo Un, Iksan-si Jeollabuk-do 54586 (KR)
(74) Representative: Mammel und Maser Patentanwälte PartG mbB
(86) International application number: PCT/KR2022/015127
(87) International publication number: WO 2023/075195

(57) **Abstract**

Disclosed are an electrolytic copper foil with high strength and high elongation characteristics and a manufacturing method therefor. The present invention provides an electrolytic copper foil having a tensile strength of 40kgf/mm² or higher at room temperature and an elongation per thickness of 1.3 ∼ 2.0 %/µm at room temperature.

## Description

### [Technical Field]

The present disclosure relates to an electrolytic copper foil and, more specifically, to a high-strength, high-elongation electrolytic copper foil that can retain high tensile strength and elongation at room temperature and even after heat treatment at high temperatures.

### [Background Art]

Copper foil is generally used as a current collector for a secondary battery. As the copper foil, a rolled copper foil obtained by a rolling process is mainly used, but the manufacturing cost is high and it is difficult to manufacture a wide copper foil. In addition, since lubricating oil must be used during rolling processing, the adhesion of the rolled copper foil to the active material may be deteriorated due to contamination of the lubricating oil, and thus the charge/discharge cycle characteristics of the battery may be deteriorated.

Lithium batteries are accompanied by heat generation due to overcharging and volume change during charge/discharge cycles. In addition, the copper foil should have a low surface roughness which leads to an improvement in close adhesion between the copper foil and the electrode active material and less influence by the copper foil substrate in relation to the expansion and contraction of the active material layer according to the charge/discharge cycle, thereby preventing the occurrence of wrinkles, breakage, etc. in the copper foil as a current collector. Therefore, there is a need for a high-elongation, high-strength and low-roughness copper foil capable of withstanding the volume change and heat generation of a lithium battery and having excellent close adhesion to an active material. In addition, when used as an anode current collector for a secondary battery, a copper foil has opposite sides coated with an electrode active material. In this regard, it is necessary to maintain the surface roughness of the electrolytic copper foil at the same or a similar level on opposite sides thereof because a difference in surface roughness between the opposite sides results in different battery characteristics.

In a manufacturing process for a secondary battery using such an electrolytic copper foil, the copper foil typically undergoes a vacuum drying step. However, because the vacuum drying is a process that is carried out at high temperature for a long period of time, the adhesion and stress between the copper foil and the active material coated surface may change to reduce the life of the battery or generate cracks during the step of vacuum drying the copper foil.

A demand for a light, thin, short, and small electronic devices increases a degree of integration of a circuit within a small area according to high performance, compactness, and lightness, with the concomitant increased requirement for fine wiring of a semiconductor mounted substrate or a main board substrate. When a thick copper foil is used for fabricating a printed wiring board having a fine pattern, an etching time for forming a wiring circuit is increased and lateral wall verticality of a wiring pattern is degraded. Particularly, when a line width of the wiring pattern formed by etching is small, the wiring may be disconnected. Accordingly, establishment of a finer pitch circuit requires a thinner copper foil. However, the thickness of a copper foil is limited and a thin copper foil is weak in mechanical strength and is highly apt to cause defects such as wrinkles, bending, etc. during the fabrication of the print wiring substrate.

Therefore, there is a need for a copper foil that exhibits high mechanical strength and high elongation at various temperatures in a wide range of thicknesses.

### [Disclosure]

### [Technical Problem]

With the aim of solving the problems encountered in the related art, an aspect of the present disclosure is to provide an electrolytic copper foil with high mechanical strength and high elongation in a wide range of thicknesses.

Another aspect of the present disclosure is to provide an electrolytic copper foil, which retains high mechanical strength and high elongation even when a high-temperature drying process is applied thereto.

### [Technical Solution]

To accomplish the technical subjects, the present disclosure provides an electrolytic copper foil having a room-temperature tensile strength of 40 kgf/ mm² or greater and ranging in room-temperature elongation per unit thickness from 1.3 to 2.0 %/µm.

In another aspect, the electrolytic copper foil of the present disclosure may have an elongation per unit thickness of 1.4-2.4 %/µm after heat treatment at 200°C for one hour.

In another aspect, the electrolytic copper foil of the present disclosure may range in the ratio of elongation per unit thickness after heat treatment at 200°C for one hour to room-temperature elongation per unit thickness from 1.05 to 1.25.

The electrolytic copper foil of the present disclosure may exhibit a high elongation per unit thickness in a thickness range of 2 to 12 pm as described above.

The electrolytic copper foil of the present disclosure may withstand 240 or more repeated bending cycles as measured by an MIT bending test.

In addition, the electrolytic copper foil of the present disclosure may preferably have a TOC content of 5-8 ppm and the M and S planes each have a hardness of 100 or greater.

The electrolytic copper foil of the present disclosure may have a tensile strength of 40-45 kgf/mm² at room temperature.

The present disclosure provides an electrolytic copper foil that retains high mechanical strength or high elongation in a wide range of thicknesses at various temperatures.

### [Description of Drawings]

The above and other aspects, features and advantages of the present disclosure will be more apparent from the following detailed description taken in conjunction with the accompanying drawings, in which:

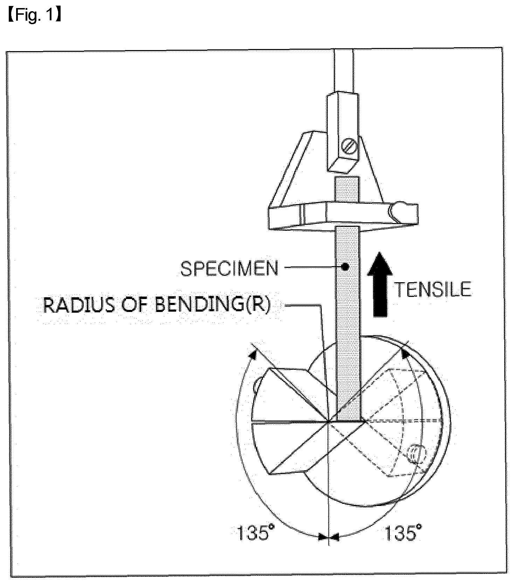

FIG. 1 is a schematic view of an MIT test apparatus for evaluating bending characteristics of specimens.

### [Best Mode]

Accordingly, embodiments and structures illustrated herein are suggested only by way of example but do not represent all technical concepts of the present disclosure. Therefore, it will be understood that various equivalents and modifications may exist which can replace the embodiments described at the time of the application. Below, a detailed description will be given of the present disclosure with reference to the accompanying drawings.

As used herein, the term "S plane" refers to a surface in contact with a drum during the manufacture of an electrolytic copper foil, which is generally called shiny surface, and the term "M plane" refers to a surface opposite thereto, which is called a deposited surface or matte surface. These terms do not express the roughness of the corresponding surfaces, but rather the S plane may have lower gloss or higher surface roughness than the M plane.

In the present disclosure, the electrolytic copper foil preferably has a tensile strength at room temperature (hereinafter referred to as "room-temperature tensile strength") of 40 kgf/mm² or greater. In addition, the electrolytic copper foil preferably has a room-temperature tensile strength of 50 kgf/mm² or less or 45 kgf/mm² or less.

When coated at a high speed with an anode active material during an anode formation process for a lithium secondary battery, a copper foil is highly likely to cause plastic deformation resulting in defects such as wrinkles, loose coatings, folds, etc. if its room-temperature tensile strength is less than 40 kgf/mm². A room-temperature tensile strength greater than 50kgf/mm² may reduce the occurrence of loose coatings or wrinkles, but is highly apt to bring about an imbalance of high tension upon application of an anode active material at high speeds and may be a cause of cracking and tearing due to the increased brittleness of the copper foil itself.

The electrolytic copper foil of the present disclosure retains a high tensile strength even after heat treatment at high temperatures. Preferably, the electrolytic copper foil of the present disclosure has a tensile strength after heat treatment at 200°C for one hour (hereinafter referred to as "high-temperature tensile strength") of 36 kgf/mm² or greater. In addition, the electrolytic copper foil preferably has a high-temperature tensile strength of 45 kgf/mm² or less or 42 kgf/mm² or less.

Here, the high-temperature tensile strength is a measurement value simulating a process in which a high-temperature steps, such as coating dry, vacuum dry, and the like, are applied during the formation of an anode for a lithium secondary battery. When the high-temperature tensile strength of the copper foil is less than 36 kgf/mm², the anode undergoes deformation induced by a stress against the volumetric expansion thereof during the charge/discharge of the lithium secondary battery, thus decreasing the lifespan of the battery during charge/discharge. A high-temperature tensile strength higher than 45 kgf/mm² decreases the deformation induced by a stress against the volumetric expansion, but imparts an increased brittleness to the copper foil under which cumulative stress provokes cracking and electrode detachment, culminating in a decrease in the lifespan of the electrode. The electrolytic copper foil is required to have high elongation with a moderate strength.

In the present disclosure, the copper foil preferably has a ratio of high-temperature tensile strength to room-temperature tensile strength of 0.9. In addition, the ratio is less than 1 and preferably less than 0.95. In the present disclosure, the electrolytic copper foil is characterized in that the deterioration of tensile strength due to high-temperature heat treatment is suppressed as much as possible.

In the present disclosure, the electrolytic copper foil has a high elongation. In detail, the electrolytic copper foil of the present disclosure is higher than conventional electrolytic copper foils in terms of the value of elongation divided by thickness (hereinafter referred to as "elongation per unit thickness"). For instance, the electrolytic copper foil may have an elongation per unit thickness at room temperature (hereinafter referred to as "room-temperature elongation per unit thickness") of 1.3 %/µm or higher or 1.5 %/µm or higher. In addition, the room-temperature elongation per unit thickness may be 2.0%/µm or less, 1.9 %/µm or less, or 1.8 %/µm or less. In the present disclosure, the electrolytic copper foil of the present disclosure also exhibits a high elongation even after heat treatment at a high temperature. The electrolytic copper foil of the present disclosure may have an elongation per unit thickness after heat treatment at 200°C for one hour (hereinafter referred to as "high-temperature elongation per unit thickness") of 1.4 %/µm or more, 1.5 %/µm or more, or 1.6 %/µm or more. The high-temperature elongation per unit thickness in the electrolytic copper foil may be 2.4 %/µm or less, 2.2 %/µm or less, or 2.0 %/µm or less.

Improvement of an energy density in a lithium secondary battery requires increasing the content of an active material and decreasing thicknesses of the non-active materials such as copper foil, aluminum foil, separators, etc. Thus, with the increase of an energy density in a lithium secondary battery, the copper foil is required to become thin. However, as the thickness of the copper foil decreases, the physical property energy content of the copper foil decreases. The thinner the copper foil, the easier it is to tear, crack, etc., even when a small external stress is applied thereto. Therefore, only when the elongation per thickness is secured over a certain level, a stable product can be manufactured in the manufacturing process of a copper foil or a manufacturing process of an electrode for a secondary battery using the copper foil whereby stable life performance can be realized in the secondary battery during charging and discharging. As will be described later, the electrolytic copper foil of the present disclosure has a high elongation per unit thickness even at a thin thickness.

When the room temperature elongation per unit thickness of the electrolytic copper foil is below the lower limit, tearing and cracking occur during the manufacture of copper foil and an electrode for a secondary battery. A room temperature elongation per unit thickness exceeding the upper limit may cause excessive deformation resulting in defects such as wrinkles, loose coating, etc. When the high temperature elongation per unit thickness is below the lower limit, the electrode may break during charging/discharging of the secondary battery and thus may decrease in lifespan. A high temperature elongation per unit thickness exceeding the upper limit may cause the deformation of the electrode, decreasing the charging/discharging performance. Thus, a suitable range of the elongation per unit thickness is required.

In the present disclosure, the electrolytic copper foil exhibits high elongation per unit thickness even at a thickness of as thin as 2 pm or 4 um. By way of example, the thickness region in which the copper foil of the present disclosure exhibits the above-described elongation per unit thickness may be in the range of 2 to 12 pm, in the range of 4 to 12 pm, in the range of 2 to 10 pm, or in the range of 4 to 10 pm.

In the present invention, the elongation per unit thickness of the electrolytic copper foil shows a narrow deviation over the thickness range of the copper foil. For example, an electrolytic copper foil 4 um thick may have an elongation per unit thickness similar to that in an electrolytic copper foil 12 pm thick.

Moreover, the electrolytic copper foil of the present disclosure has a ratio of high-temperature elongation to room-temperature elongation (elongation ratio) of 1 or higher or 1.05 or higher. In addition, the ratio of high-temperature elongation to room-temperature elongation (elongation ratio) may be 1.25 or less or 1.2 or less.

Preferably, the electrolytic copper foil of the present disclosure may withstand 240 or more repeated bending cycles as measured by an MIT bending test. For example, the electrolytic copper foil of the present disclosure may withstand 240-300 repeated bending cycles as measured by an MIT bending test. During charging/discharging cycles, a copper foil substrate undergoes contraction and expansion, together with the secondary battery. With higher MIT values, the copper foil substrate can more easily endure the stress caused by the bending. Thus, a copper foil with a high MIT value can improve charge/discharge cycle characteristics and guarantee high-capacity performance.

In the electrolytic copper foil of the present disclosure, the M plane and the S plane both preferably have a Vickers hardness of 100-140. Preferably, the M plane of the copper foil has a Vickers hardness of 100-110. In addition, the S plane of the electrolytic copper foil preferably ranges in Vickers hardness from 120 to 140.

In the present disclosure, the electrolytic copper foil preferably has a hardness of 100 or greater in order to provide resistance to surface defects during manufacturing processes or to surface scratch or deformation by external force. This lower hardness limit makes it possible to prevent the occurrence of defects or poor quality during the manufacturing process of the copper foil and the lithium secondary battery. A hardness of the electrolytic copper foil exceeding 140 may lead to a decrease in elongation.

Preferably, the electrolytic copper foil of the present disclosure has an M-plane hardness of 100 or more, and a ratio of M-plane hardness/S-plane hardness is 0.7 to 0.9. If the hardness ratio is less than 0.7, the strength may decrease, and if it exceeds 0.9, the elongation may decrease.

In the present disclosure, in order for the electrolytic copper foil to realize high strength and high elongation and minimize the fluctuation of mechanical properties at room temperature and high temperatures and the difference in surface property, a combination of additives selected from the following additives A to C may be used in the electrolyte solution.

### Additive A

Additive A is a thiourea compound, a compound in which a thiol group is linked to a nitrogen-bearing heteroring, or a mixture thereof.

Here, the thiourea compound may be at least one selected from the group consisting of ethylenethiourea, diethylthiourea, acethylenethiourea, dipropylthiourea, dibutylthiourea, N-trifluoroacetylthiourea, N-ethylthiourea, N-cyanoacetylthiourea, N-allylthiourea, o-tolylthiourea, N,N'-butylene thiourea, thiazolidinethiol, 4-thiazolinethiol, 4-methyl-2-pyrimidinethiol, 2-thiouraci, but with no limitations thereto. It may be selected from various thiourea compounds available as additives in the art.

The compound of additive A in which a thiol group is linked to a nitrogen-bearing heteroring may be at least one selected from the group consisting of 2-mercapto-5-benzoimidazole sulfonic acid sodium salt, sodium 3-(5-mercapto-1-tetrazolyl)benzene sulfonate, and 2-mercapto benzothiazole, but with no limitations thereto. So long as it is available as an additive in the art, any compound in which a thiol group is linked to a nitrogen-bearing heteroring may be used.

According to the present disclosure, additive A is preferably added in an amount of less than 2 ppm and more preferably in an amount of 0.5-1.9 ppm in the electrolyte solution.

In the present disclosure, additive A can improve the strength of the electrolytic copper foil. When a content of additive A exceeds 1.9 ppm, the deposited surface has an increased surface roughness, making it difficult to prepare an electrolytic copper foil with a low surface roughness and decreasing the elongation.

### Additive B

Additive B is a sulfonic acid of a sulfur-bearing compound or a metal salt thereof.

For instance, the sulfonic acid of a sulfur-bearing compound or a metal salt thereof may be at least one selected from the group consisting of disodium bis-(3-sulfopropyl)-disulfide (SPS), 3-mercapto-1-propane sulfonic acid (MPS), sodium 3-(N,N-dimethylthiocarbamoyl)-thiopropane sulfonate (DPS), sodium 3-[(amino-iminomethyl)thio]-1-propanesulfonate (UPS), o-ethyldithiocarbonate-S-(3-sulfopropyl)-ester sodium (OPX), 3-(benzothiazolyl-2-mercapto)-propylsulfonate sodium (ZPS), ethylenedithiodipropylsulfonic acid sodium salt, thioglycolic acid, thiophosphoric acid-O-ethyl-bis-(ω-sulfopropyl)ester disodium salt, and thiophosphoric acid-tris-(ω-sulfopropyl)ester trisodium salt, but with no limitations thereto. Any sulfonic acid of a sulfur-bearing compound or a metal salt thereof is possible as long as it is available as an additive in the art.

In the present disclosure, additive B is preferably added in an amount of 10-25 ppm to the electrolyte solution. More preferably, additive B is added in an amount of 13-25 ppm to the electrolyte. Additive B can enhance the surface gloss of the electrolytic copper foil. When a content of additive B is below 10 ppm, the electrolytic copper foil may have poor surface gloss. When the content of additive B exceeds 25 ppm, the deposited plane increases in surface roughness, which makes it difficult to prepare an electrolytic copper foil with a low surface roughness and decreases the tensile strength of the electrolytic copper foil.

### Additive C

Additive C is a non-ionic water-soluble polymer.

The non-ionic water-soluble polymer may be at least one selected from the group consisting of polyethylene glycol, polyglycerin, nonylphenol polyglycol ether, octane diol-bis-(polyalkylene glycol ether), ocatanol polyalkylene glycol ether, oleic acid polyglycol ether, polyethylene propylene glycol, polyethylene glycoldimethyl ether, polyoxypropylene glycol, polyvinyl alcohol, β-naphthol polyglycol ether, stearic acid polyglycol ether, and stearyl alcohol polyglycol ether, but with no limitations thereto. So long as it is available as an additive in the art, any water-soluble polymer can be used. For example, the polyethylene glycol may have a molecular weight of 100 to 20,000.

In addition, the non-ionic water-soluble polymer may be at least one selected from the group consisting of hydroxyethyl cellulose and carboxymethylcellulose, but with no limitations thereto.

Moreover, the non-ionic water-soluble polymer may be a water-soluble proteinous glue substance, such as gelatin, collagen, and so on, having a structure in which glycine, hydroxy lysine, and hydroxy proline are repeated. There are six or more classes including type I, type II, and type V. A chain in which three types of amino acids are repeated is called alpha chain. A set of three congruent geometrical helices of alpha chains, with the same axis is referred to as triple helix. In general, as crosslinks occur between these triple helices, a complex structure of collagen is formed. The non-ionic water-soluble polymer of the present disclosure may be at least one selected from the group consisting of collagen and gelatin, but with no limitations thereto.

In the present disclosure, additive C may be preferably added in an amount of 5-10 ppm to the electrolyte solution. Additive C used in the copper electrolyte solution can decrease the surface roughness and increase the surface gloss in the electrolytic copper foil. When additive C is used at a content less than 5 ppm, the deposited surface has an increased surface roughness, which makes it difficult to prepare an electrolytic copper foil with a low surface roughness and decreases the gloss of the electrolytic copper foil. A content of additive C exceeding 10 ppm may cause the electrolytic copper foil to decrease in strength and hardness at high temperatures.

In the present disclosure, content ratios of additives A, B, and C in the electrolyte can be controlled. Preferably, A/(B+C) may be in the range of 0.028-0.060. When A/(B+C) is lower than 0.028, the copper foil decreases in tensile strength at room temperature and high temperatures. With A/(B+C) exceeding 0.060, the copper foil may decrease in elongation at room temperature and high temperatures.

The effects of the additives A, B, and C in the electrolyte on physical properties of the electrolytic copper foil have been described, but the above description is exemplary. The type, content, or combination of individual additives of the present disclosure may also affect other physical properties of the electrolytic copper foil manufactured in the present disclosure through unknown mechanisms.

### [Mode for Invention]

### <PREPARATION EXAMPLE 1: Electrolytic Copper Foil>

### (EXAMPLES 1 TO 5)

Electroplating was conducted at 50-60°C under a current density of 50-70 A/dm² (ASD) in an electrolyte containing 200-452 g/L CuSO₄ 5H₂O, 30-250 g/L sulfuric acid, and 10-30 ppm chlorine ions. To the electrolyte were added 0.5-1.9 ppm ETU (ethylene thiourea) as additive A, 10-20 ppm SPS (bis-(3-sulfopropyl) -disulfide disodium salt) and 3-10 ppm ZPS (3- (benzothiazolyl-2-mercapto) -propylsulfonic acid sodium salt) as additive B, and 5-10 ppm PEG (polyethylene glycol, Mw: 500-4000) as additive C. The compositions of the electrolyte in each Example are summarized in Table 1. The thickness of the plated film differed from one example to another.

### (COMPARATIVE EXAMPLE 1)

A plated film with a thickness of 18 um was prepared by electroplating at 50-60°C under a current density of 50-70 A/dm² (ASD) in an electrolyte containing 100 g/L Cu, 150 g/L sulfuric acid, and 20 ppm chlorine ions. To the electrolyte were added 2 ppm DET (diethylthiourea) as additive A, 45ppm SPS (bis-(3-sulfopropyl)-disulfide disodium salt) and 10 ppm ZPS (3-(benzothiazolyl-2-mercapto)-propylsulfonic acid sodium salt) as additive B, 20ppm PEG (polyethylene glycol, Mw: 500-4000) as additive C, and 3 ppm JGB (Janus Green B) as additive D.

### (COMPARATIVE EXAMPLE 2)

A plated film with a thickness of 4 um was prepared by electroplating at 50-60°C under a current density of 50-70 A/dm² (ASD) in an electrolyte containing 90 g/L Cu, 120 g/L sulfuric acid, and 30 ppm chlorine ions. To the electrolyte were added 3 ppm DET (diethylthiourea) as additive A, 60 ppm SPS (bis-(3-sulfopropyl)-disulfide disodium salt) and 40ppm ZPS (3-(benzothiazolyl-2-mercapto)-propionic acid sodium salt) as additive B, 20 ppm PEG (polyethylene glycol, Mw: 500-4000) and 10 ppm PGL (polyglycerin) as additive C, 375 ppm Zn, and 75 ppm Fe.

### (COMPARATIVE EXAMPLE 3)

A plated film with a thickness of 6 um was prepared by electroplating at 50-60°C under a current density of 50-70 A/dm² (ASD) in an electrolyte containing 100 g/L Cu, 130 g/L sulfuric acid, and 30 ppm chlorine ions. To the electrolyte were added 26 ppm DET (diethylthiourea) as additive A, 80 ppm SPS (bis-(3-sulfopropyl)-disulfide disodium salt) and 40 ppm ZPS (3-(benzothiazolyl-2-mercapto)-propionic acid sodium salt) as additive B, and 20 ppm PEG (polyethylene glycol, Mw: 500-4000) and 10 ppm PGL (polyglycerin) as additive C.

### (COMPARATIVE EXAMPLE 4)

A plated film with a thickness of 12 um was prepared by electroplating at 50-60°C under a current density of 50-70 A/dm² (ASD) in an electrolyte containing 80 g/L Cu, 140 g/L sulfuric acid, and 10 ppm chlorine ions. To the electrolyte were added 5 ppm MPS (3-mercapto-1-propane sulfonic acid) as additive B and DDAC (diallyldimethyl ammonium chloride) as additive E.

### (COMPARATIVE EXAMPLE 5)

A plated film with a thickness of 12 um was prepared by electroplating at 50-60°C under a current density of 50-70 A/dm² (ASD) in an electrolyte containing 80 g/L Cu, 140 g/L sulfuric acid, and 10 ppm chlorine ions. To the electrolyte were added 5 ppm MPS (3-mercapto-1-propane sulfonic acid) as additive B and DDAC (diallyldimethyl ammonium chloride) as additive E.

Compositions of the electrolyte solutions for individual Examples are summarized in Table 1, below.

**TABLE 1**

| Ex. # | Cu (g/L) | H₂SO₄ (g/L) | Additive | | | | | | | | | | | | Cl⁻ | Zn | Fe |
|---|---|---|---|---|---|---|---|---|---|---|---|---|---|---|---|---|---|
| | | | A | | B | | | | C-1 | | C-2 | C-3 | D | E | | | |
| | | | ETU | DET | SPS | MPS | DPS | ZPS | PEG | PGL | HEC | Gelatin | JGB | DDAC | | | |
| 1 | 50 | 30 | 1.8 | | | | 20 | | 10 | | | | | | 30 | | |
| 2 | 80 | 50 | 1.5 | | | | 20 | | 5 | | | | | | 20 | | |
| 3 | 90 | 100 | 1 | | | | 15 | | 5 | | | | | | 20 | | |
| 4 | 100 | 120 | 0.5 | | | | 10 | | 5 | | | | | | 30 | | |
| 5 | 100 | 150 | 0.5 | | | | 5 | | 5 | | | | | | 10 | | |
| C.1 | 100 | 150 | | 2 | 45 | | | 10 | 20 | | | | 3 | | 20 | | |
| C.2 | 90 | 120 | | 3 | 60 | | | 40 | 20 | 10 | | | | | 30 | 375 | 75 |
| C.3 | 100 | 130 | | 2.5 | 80 | | | 40 | 20 | 10 | | | | | 30 | | |
| C.4 | 80 | 140 | | | | 5 | | | | | | | | 3 | 10 | | |
| C.5 | 80 | 100 | | | 4 | | | | | | 2 | 5 | | | 13 | | |

### <Evaluation of Physical Properties>

Each of the surface-treated copper foil specimens prepared in the Examples and Comparative Examples was measured for physical properties and the measurements are listed in Table 2. Physical properties and measurement methods therefor are as follows.

### a. Tensile strength/Elongation

The electrolytic copper foils were prepared into specimens, each having a dimension of 12.7mm in width * 50 mm in gauge length. A tensile test was performed on each specimen at a crosshead speed of 50.8 mm/min according to the standard of IPC-TM-650 2.4.18B to measure a maximum load and an elongation at break, which were set forth as tensile strength and elongation, respectively. For each specimen, the tensile strength and elongation were measured at room temperature and after heat treatment 200°C for one hour, and the results are given in Table 2, below.

Ratios of high-temperature tensile strength to room temperature tensile strength (tensile strength ratios) and ratios of high-temperature elongation to room temperature elongation (elongation ratio) were calculated and are given in Table 2.

### b. MIT bending test

An MIT bending test was preformed using the MIT bending machine shown in FIG. 1. In the bending test, an original foil specimen was repetitively bent under the following condition. The bending cycles were counted until the specimen was broken.
1) Radius of bending (R) : 0.38mm,
2) Angle of bending: 135°,
3) Speed of bending: 175/min
4) Load: 500g

### c. TOC measurement of copper foil

The electrolytic copper foil specimens prepared in the Examples and Comparative Examples were dissolved in a solvent including 60 ml of hydrochloric acid (35%) and 40 ml of hydrogen peroxide (30%) and analyzed for TOC content therein, using TOC-V WP, Shimadzu. The results are listed in Table 2 (unit ppm), below.

### d. Hardness

Vickers hardness was measured according to the ISO 6507-1(KS B 0811) standard. Measurement conditions are as follows.
1) Hardness scale : HV0.02
2) Dwell time : 10 sec.
3) Hardness tester type : DURAMIN-40 A1

**TABLE 2**

| Ex. # | Thick (µm) | Tensile strength (kgf/**mm²**) | | Elong. (%) | | Elong. per unit thick. (%/µm) | | Elong. ratio | TOC | MIT | Hardness | |
|---|---|---|---|---|---|---|---|---|---|---|---|---|
| | | Room Temp. | High Temp. | Room Temp. | High Temp. | Room Temp. | High Temp. | | | | M plane | S plane |
| 1 | 4 | 43 | 41 | 5.2 | 5.6 | 1.30 | 1.40 | 1.08 | 5 | 270 | 106 | 138 |
| 2 | 5 | 41.7 | 38.7 | 8.1 | 9.5 | 1.62 | 1.90 | 1.17 | 5.7 | 250 | 102 | 120 |
| 3 | 6 | 42.3 | 40 | 9.9 | 11.8 | 1.65 | 1.97 | 1.19 | 5.9 | 260 | 109 | 153 |
| 4 | 8 | 40.5 | 37.5 | 15.3 | 19.2 | 1.91 | 2.40 | 1.25 | 6 | 250 | 110 | 130 |
| 5 | 10 | 42.4 | 39.1 | 15.1 | 16.5 | 1.51 | 1.65 | 1.09 | 8 | 240 | 102 | 120 |
| C.1 | 18 | 46.15 | 43.3 | 7.21 | 11.6; | 0.40 | 0.65 | 1.61 | 10 | 150 | 85 | 124 |
| C.2 | 4 | 43.7 | 41.9 | 3.2 | 4.1 | 0.80 | 1.03 | 1.28 | 10 | 230 | 84 | 122 |
| C.3 | 6 | 42.3 | 40.5 | 7.2 | 7 | 1.20 | 1.17 | 0.97 | 9 | 200 | 84 | 120 |
| C.4 | 12 | 38.2 | 34.6 | 6.2 | 9.8 | 0.52 | 0.82 | 1.58 | 9 | 143 | 78 | 85 |
| C.5 | 12 | 33.1 | 31.7 | 6.7 | 10 | 0.56 | 0.83 | 1.49 | 10 | 141 | 75 | 85 |

As shown in Table 2, the electrolytic copper foil according to Examples 1 to 5 of the present disclosure exhibited a TOC content of as low as 5 to 8.

It is understood from data of Table 2 that the specimens of Examples 1 to 5 exhibited a strength of as high as 40 kgf/mm² at room temperature and retained high strength even after heat treatment at as high as 200°C.

As shown in Table 2, the specimens of Examples 1 to 5 exhibited an elongation per unit thickness of as high as 1.3-1.91 %/µm at room temperature. Even the 4 µm-thick specimen of Example 1 had an elongation per unit thickness of 1.3 %/µm whereas the elongation per unit thickness in the specimens of the Comparative Examples was 1.2 or less.

Furthermore, the data in Table 2 include 240 or more MIT bending cycles for the specimens of Examples 1 to 5, indicating excellent bending resistance. The specimens of the Comparative Examples exhibited 230 or less MIT bending cycles.

As can be seen from data of Table 2, M planes in the specimens of Examples 1 to 5 were measured to have a hardness of 100 or greater, exhibiting excellent hardness characteristics. In the Comparative Examples, the hardness was below 100.

The above-described embodiments are in all respects as illustrative and non-limiting, it is to be understood that the scope of the present disclosure are described below, rather than the above description appears by the claims, and the scope of the present disclosure is defined by the appended claims rather than the foregoing description and the exemplary embodiments described therein. Various modifications made within the meaning of an equivalent of the claims of the disclosure and within the claims are to be regarded to be in the scope of the present disclosure.

### Industrial Applicability

The present disclosure is applicable to electrolytic copper foils.

## Claims

1. An electrolytic copper foil, having a room-temperature tensile strength of 40 kgf/ mm² or greater and ranging in room-temperature elongation per unit thickness from 1.3 to 2.0 %/µm.

2. The electrolytic copper foil of claim 1, wherein the electrolytic copper foil has an elongation per unit thickness of 1.4-2.4 %/µm after heat treatment at 200°C for one hour.

3. The electrolytic copper foil of claim 2, wherein the electrolytic copper foil ranges in ratio of elongation per unit thickness after heat treatment at 200°C for one hour to room-temperature elongation per unit thickness from 1.05 to 1.25.

4. The electrolytic copper foil of any one of claims 1 to 3, wherein the electrolytic copper foil is 2-12 µm in thickness.

5. The electrolytic copper foil of claim 1, where the electrolytic copper foil is 4-10 um in thickness.

6. The electrolytic copper foil of claim 1, wherein the electrolytic copper foil withstands 240 or more repeated bending cycles as measured by an MIT bending test.

7. The electrolytic copper foil of claim 1, wherein the electrolytic copper foil has a TOC (Total Organic Carbon) content of 5-8 ppm.

8. The electrolytic copper foil of claim 1, wherein the M plane and the S plane each have a hardness of 100 or greater.

9. The electrolytic copper foil of claim 1, wherein the electrolytic copper foil has a room-temperature tensile strength of 40-45 kgf/mm².
